(19) Europäisches Patentamt
European Patent Office
Office européen des brevets

(11) **EP 3 736 749 A1**

(12) **EUROPÄISCHE PATENTANMELDUNG**

(43) Veröffentlichungstag:
**11.11.2020 Patentblatt 2020/46**

(51) Int Cl.:
***G06N 20/20*** *(2019.01)*

(21) Anmeldenummer: **19173512.5**

(22) Anmeldetag: **09.05.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder: **Schall, Daniel
2020 Hollabrunn (AT)**

(74) Vertreter: **Maier, Daniel Oliver
Siemens AG
Postfach 22 16 34
80506 München (DE)**

(54) **VERFAHREN UND VORRICHTUNG ZUR ANSTEUERUNG EINES GERÄTS MIT EINEM DATENSATZ**

(57) Verfahren zur Ansteuerung eines Geräts mit einem Datensatz, wobei, ausgehend von einem ersten Modell, ein reduziertes Modell auf Basis eines Reduktions-Verfahrens, welches auf dem Prinzip der Wissensdestillation beruht, erzeugt wird und mithilfe des reduzierten Modells der Datensatz erzeugt wird, mit welchem das Gerät angesteuert wird.

## FIG 5

EP 3 736 749 A1

**Beschreibung**

Die Erfindung betrifft ein Verfahren und eine Vorrichtung zur Ansteuerung eines Geräts mit einem Datensatz.

IoT-basierte Lösungen im industriellen Umfeld werden in den nächsten Jahren rasch eingeführt. Diese Lösungen versprechen, die Vision des "digitalen Zwillings" zu verwirklichen, welches beispielsweise ein virtuelles Modell der Funktionen und Zustände einer Produktionsanlage bildet.

Ein wichtiges Element, um mit den Daten umzugehen, die von den Sensoren erzeugt werden, um den digitalen Zwilling zu aktualisieren, ist die Verwendung von Machine-Learning-Techniken (ML), welches ein breites Spektrum an Methoden und Werkzeugen bietet.

Viele dieser Methoden, wie Deep Learning und Tools wie "Tensorflow" (https://tensorflow.org) zum Trainieren von Deep Neural Networks (DNN), sind so optimiert, dass sie in der Cloud ausgeführt werden und auf der Grundlage riesiger Datenmengen sehr komplexe Modelle trainieren.

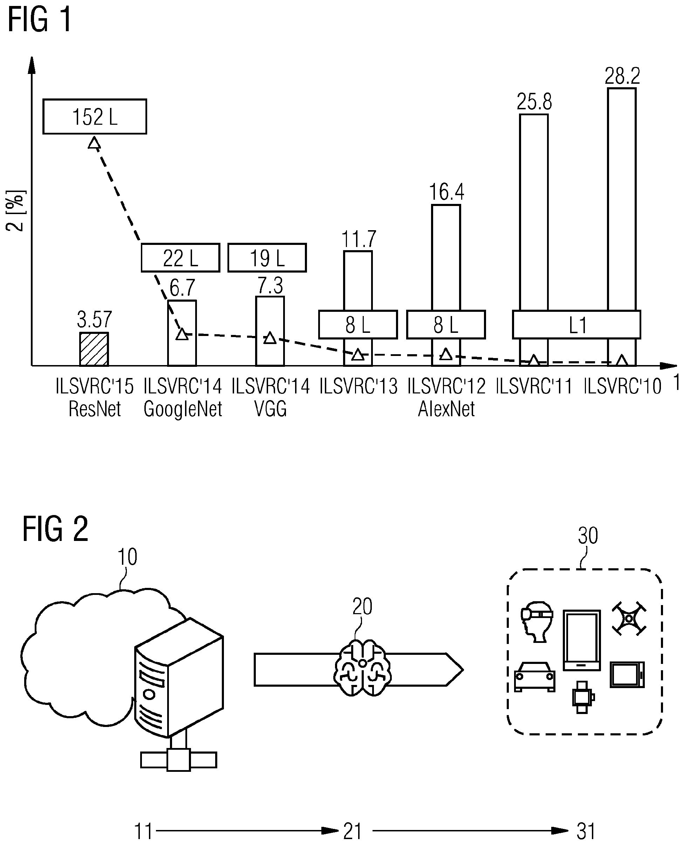

Die angefügte **Fig. 1** zeigt eine Darstellung der Top-5 Fehler einer ImageNet-Klassifikation für DNN-Architekturen nach dem Stand der Technik mit zunehmender Anzahl an Lagen L im Vergleich zur Genauigkeit dieser Modelle, welche auf einer "Tiefen-Revolution" ("Revolution-of-Depth") Architektur basieren. In der Figur sind DNN-Architekturen 2 über ImageNet-Klassifikations-Fehler 2 in [%] erkennbar.

Die Ausführung von Inferenz mit einem DNN von über 150 Lagen auf einem eingebetteten Gerät ist aufgrund von Leistungsbeschränkungen und Latenzzeiten im Stand der Technik offensichtlich nicht möglich.

Gleichzeitig macht dieser Quantensprung in Bezug auf Qualität und Genauigkeit von ML-Modellen, die auf Revolution-of-Depth-Lernarchitekturen basieren, die Vision der künstlichen Intelligenz ("artificial intelligence", AI) und autonomen Maschinen zur Realität. Bestimmte Aufgaben in der Industrie, wie etwa die Kontrolle der industriellen Überwachung durch den Menschen, könnten die Bediener möglicherweise durch ein AIbasiertes System ersetzen, um den Zustand einer Maschine oder eines Systems zu klassifizieren und entsprechende Maßnahmen zu ergreifen. Dieser Komplexitätsgrad würde jedoch ML-Modelle mit hoher Qualität und Genauigkeit erfordern.

Die Notwendigkeit, große Datenmengen in einem lokalen Kontext zu verarbeiten, in dem sich die Daten befinden, und die Notwendigkeit, Rückkopplungsschleifen zu implementieren, hat zur Entwicklung von Edge-Computing-Plattformen geführt. Diese neuen, im Stand der Technik bekannten Edge-Plattformen bieten die Möglichkeit, komplexe Analyseaufgaben beim Benutzer auszuführen, wie in der angefügten **Fig. 2** dargestellt.

Ein Server beziehungsweise eine Cloud 10 führt dabei ein Training 11 eines Deep Neural Networks (DNN)-Modells durch, sowie führt jeweilige Lagen eines Anwendungs-Programmcodes mit dem DNN aus.

Anschließend erfolgt eine intelligente Bewertung und Analyse 20, wodurch als Geräte-Vorteile 21 geringe Latenz und hoher Datenschutz erreicht werden können.

Durch ein Edge/ Gerät 30 erfolgt in weiterer Folge die Ausführung 31 jeweiliger Lagen des Anwendungs-Programmcodes mit dem DNN.

Cloud-to-Edge (C2E) ist eine wichtige Architektur bei der Realisierung zukünftiger industrieller IoT-Systeme. Bei den ML-Modellen, die auf diesen Edge-Geräten ausgeführt werden können, handelt es sich jedoch sicher nicht um Modelle, die höchste Qualität und Genauigkeit bieten.

Es ist Aufgabe der Erfindung, große Modelle zur weiteren Verarbeitung in kleinere Modelle so abzubilden, dass trotzdem vergleichbare Ergebnisse in der Verarbeitung erreicht werden.

Die Erfindung löst die Aufgabe durch ein Verfahren eingangs genannter Art, wobei, ausgehend von einem ersten Modell, ein reduziertes Modell auf Basis eines Reduktions-Verfahrens, welches auf dem Prinzip der Wissensdestillation beruht, erzeugt wird und mithilfe des reduzierten Modells der Datensatz erzeugt wird, mit welchem das Gerät angesteuert wird.

Dadurch wird erreicht, dass das erste Modell in den reduzierten, kleineren Modell transformiert wird, wobei vergleichbare Ergebnisse bei Verwendung des reduzierten Modell im Vergleich zu einer Verwendung des ersten Modells erzielt werden.

Es kann also mithilfe des kleinen, reduzierten Modells der Datensatz zur Steuerung des Geräts gebildet werden, ohne dass das große, komplexe Modell zu verwenden. Dadurch kann das reduzierte Modell durch einer Steuervorrichtung gespeichert und verarbeitet werden, welche nur über einschränkte Speicher- und/oder Rechen-Ressourcen verfügt. Die Steuervorrichtung kann dann das Gerät in weiterer Folge dementsprechend ansteuern.

Es findet eine Methode Anwendung, welche im Bereich des maschinellen Lernens als Wissensdestillation ("knowledge destillation", KD) bekannt ist. KD ist eine einfache, aber effektive Möglichkeit, die Leistung von Deep-Learning-Modellen auf eingebetteten Geräten (Edge-Geräte oder Mobilgeräte) zu verbessern.

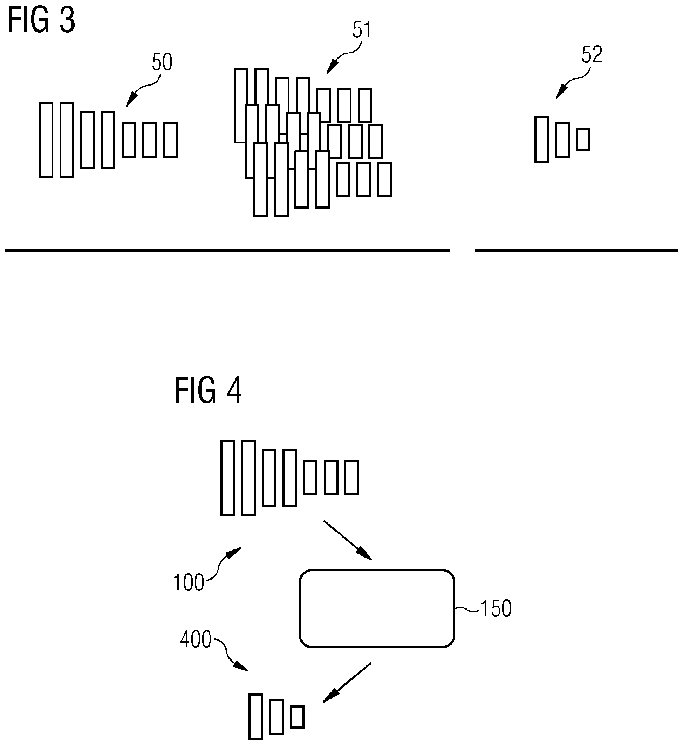

**Fig. 3** visualisiert die Erstellung eines kleinen Modells 52 basierend auf großen, komplexen Modellen 50 oder Modellensembles 51.

Demgemäß kann ein großes und komplexes Netzwerk 50 oder ein Ensemble-Modell 51 dabei trainiert werden, indem aus den gegebenen Daten wichtige Merkmale extrahiert werden und somit bessere Vorhersagen erzeugt werden können. Mit Hilfe des komplexen Modells kann anschließend ein kleines Modell 52 beziehungsweise NN ausgebildet werden, welches in der Lage ist, vergleichbare Ergebnisse zu erzielen.

In einigen Fällen kann das kleine Netzwerk sogar in der Lage sein, die Ergebnisse des komplexen, großen Netzwerks zu replizieren.

Mittels Anwendung von KD auf Industrial Cloud-Edge-Architekturen können Bandbreite und Latenzzeiten bei Inferenzaufgaben reduziert werden.

Der KD-Ansatz für Cloud-Edge optimiert vorteilhaft Analysen und AI, um beste Qualität und Leistung zu liefern.

Ferner können mittels KD beispielsweise die besten oder effizientesten Modelle für Edge-Geräte unter Verwendung von Lehrer-Ensembles trainiert werden.

Außerdem können fortschrittliche Analyselösungen für Cloud-Edge-Architekturen bereitgestellt werden, um das volle Potenzial solcher Architekturen in industriellen Umgebungen auszuschöpfen.

In einer Weiterbildung der Erfindung ist es vorgesehen, dass das Reduktions-Verfahren zumindest ein Lehrer-Modell als erstes Modell und ein Studenten-Modell als reduziertes Modell umfasst.

Dadurch wird erreicht, dass eine besonders günstige Variante der KD angewendet wird, mittels welcher eine besonders günstige Modell-Reduktion durchgeführt werden kann.

In einer Weiterbildung der Erfindung ist es vorgesehen, dass vor dem Training des Studenten-Modells zumindest ein Lehrer-Modell ausgewählt wird.

Dadurch wird eine besonders effiziente Modell-Reduktion erreicht.

In einer Weiterbildung der Erfindung ist es vorgesehen, wobei das zumindest eine Lehrer-Modell von der Art von Assetdaten oder Sensordaten abhängt.

Dadurch wird eine dynamische und besonders effiziente DatenReduktion erreicht.

In einer Weiterbildung der Erfindung ist es vorgesehen, dass zwischen dem zumindest einen Lehrer-Modell und dem Studenten-Modell eine Verlustfunktion gebildet werden kann, welche nach dem Zusammenhang definiert ist:

$$\mathcal{L}(\theta) = -\sum q_i \, log(p_i)$$

wobei

$q_i$ das sogenannte Soft-Label des Lehrer-Modells, das als Pseudo-Label fungiert, ist, und
$p$ die Ausgabe-Wahrscheinlichkeit der Klasse des Studenten-Modells ist.

Dadurch wird eine besonders effiziente Modell-Reduktion erreicht.

In einer Weiterbildung der Erfindung ist es vorgesehen, dass zumindest zwei Lehrer-Modelle vorgesehen sind, welche gewichtet werden und in der Verlustfunktion berücksichtigt werden, wobei Soft-Labels $q$ bestimmt werden nach dem Zusammenhang:

$$q_i = \sum_k w_k \, q_{ik}$$

wobei

$w_k \in [0,1]$ das Lehrergewicht ist, und
$q_{ik}$ das Soft-Label des $k$-ten Lehrers ist.

Dadurch wird erreicht, dass eine vorteilhafte Berücksichtigung entsprechender Lehrer-Modelle erfolgen kann, um eine effiziente Modell-Reduktion durchzuführen.

In einer Weiterbildung der Erfindung ist es vorgesehen, dass das erzeugte, reduzierte Modell in einem Speicher eines Edge-Geräts gespeichert wird und mithilfe des reduzierten Modells im Speicher des Edge-Geräts der Datensatz erzeugt wird, mit welchem das Gerät von dem Edge-Gerät angesteuert wird.

Dadurch wird erreicht, dass bei der Ausführung einer Anwendung durch das Edge-Gerät vergleichbare Ergebnisse in der Verarbeitung erreicht werden, wie bei einer Ansteuerung von einer Cloud, jedoch ohne große Datenmengen zur weiteren Verarbeitung übertragen zu müssen.

Edge Computing bezeichnet im Gegensatz zum Cloud Computing die dezentrale Datenverarbeitung am Rand des Netzwerks, der sogenannten Edge, mittel einem Edge-Gerät.

Die Erfindung löst die Aufgabe auch durch eine Vorrichtung eingangs genannter Art, welche dazu eingerichtet ist, ausgehend von einem ersten Modell, ein reduziertes Modell auf Basis eines Reduktions-Verfahrens nach einem der vorhergehenden Ansprüche zu erzeugen und mithilfe des reduzierten Modells den Datensatz zu erzeugen und das Gerät mit dem Datensatz anzusteuern

In einer Weiterbildung der Erfindung ist es vorgesehen, dass das reduzierte Modell in einem Speicher eines Edge-Geräts gespeichert ist.

Dadurch wird erreicht, dass ein Edge-Gerät mit begrenzten Speicher- und Rechen-Ressourcen in der Lage ist, ein Gerät entsprechend mit einem reduzierten Modell und einem Datensatz anzusteuern, wodurch eine System-Funktionalität von der Cloud in die Edge verschoben werden kann, wodurch ein System mit Subsystemen besser verteilt werden kann und eine DatenKommunikation verringert werden kann.

Die Erfindung wird nachfolgend anhand eines in den beigeschlossenen Zeichnungen dargestellten Ausführungsbeispiels näher erläutert. In den Zeichnungen zeigt:

Fig. 1    eine Darstellung der Top-5 Fehler einer ImageNet-Klassifikation für DNN-Architekturen mit zunehmender Anzahl an Lagen,

Fig. 2    eine schematische Darstellung heutiger Deep-Learning Ökosysteme,

Fig. 3    eine schematische Darstellung verschiedener Datenmodelle bei der Verwendung von KD,

Fig. 4    eine schematische Darstellung eines Lehrer-Studenten-Musters bei KD,

Fig. 5    eine schematische Darstellung eines Lehrer-Studenten-Modell-Trainings,

Fig. 6    eine schematische Darstellung eines Studenten-Trainings,

Fig. 7    ein Beispiel eines Pseudo-Codes zur Bestimmung eines Lehrer-Gewichts,

Fig. 8    ein Beispiel eines Pseudo-Codes zum Trainieren eines Studenten.

**Fig. 4** zeigt ein Ausführungsbeispiel eines Lehrer-Studenten-Musters in KD. Ein Lehrer 100 kann ein DNN (oder ein Ensemble von Modellen) sein, das mit einer großen Datenmenge verknüpft wurde, sodass er sich auf unsichtbare Daten gut verallgemeinern kann.

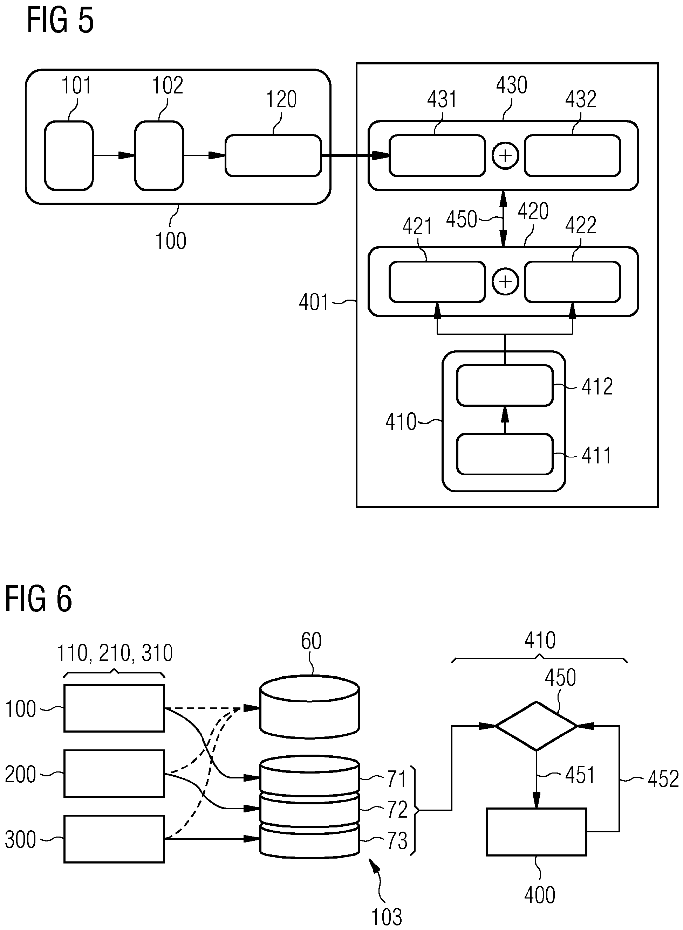

**Fig. 5** und **Fig. 5** zeigen ein Ausführungsbeispiel für ein KD Verfahren.

Ein Studenten-Modell 410 eines Studenten 400 ist ein leichtes, flaches Netzwerk, das vom Lehrer 100 trainiert wird, wobei das Hauptziel darin besteht, "die meisten Verallgemeinerungen des Lehrers zu erlernen und dennoch leichter zu sein". Ein leichteres (Studenten-) Modell kann auf dem Edge-Gerät ausgeführt werden.

Ein erfolgreiches Muster zum Extrahieren von Wissen aus komplexen DNN wird als Lehrer-Studenten-Muster bezeichnet.

Durch das erfindungsgemäße Verfahren kann erreicht werden, dass, wenn einige Bezeichnungen Fehler aufweisen, ein Lehrer-Modell 110, 210, 310 einige dieser Fehler beseitigen, beziehungsweise Daten zensieren kann, wodurch das Lernen für den Studenten 400 erleichtert wird.

Ferner kann der Lehrer 100 dem Studenten 400 einfachere, weiche Beschriftungen geben und folglich Komplexität kann durch das Filtern von Zielen durch das Lehrer-Modell 110 entnommen werden kann.

In einem weiteren Aspekt kann das Lernen beispielsweise von harten 0/1-Markierungen schwieriger sein, als das Lernen von den bedingten Wahrscheinlichkeiten eines Lehrers 100. In schwierigen Fällen kann der Lehrer 100 die Ungewissheit über mehrere Ausgaben verteilen. Die Unsicherheit aus dem Lehrer-Modell 110 ist informativer für das Studenten-Modell 410 als die ursprünglichen 0/1-Markierungen.

Außerdem können ursprüngliche Ziele ganz oder teilweise von Merkmalen abhängen, die nicht zum Trainieren zur Verfügung stehen, jedoch kann das Studenten-Modell 410 Ziele sehen, welche nur von den Eingangs-Merkmalen abhängen. Die Ziele des Lehrer-Modells 110 könne jedoch nur von den verfügbaren Eingaben abhängen. Die Abhängigkeit von nicht verfügbaren Funktionen kann durch das Filtern von Zielen durch das Lehrer-Modell beseitigt werden.

Im Weiteren ist nun ein Ausführungsbeispiel der Erfindung angeführt, welches sich auf ein Verfahren zur Ansteuerung eines Geräts mit einem Datensatz bezieht, wobei, ausgehend von einem ersten Modell, ein reduziertes Modell auf Basis eines Reduktions-Verfahrens, welches auf dem Prinzip der Wissensdestillation beruht, erzeugt wird und mithilfe des reduzierten Modells der Datensatz erzeugt wird, mit welchem das Gerät angesteuert wird.

Das Reduktions-Verfahren umfasst Lehrer-Modelle 110, 210, 310 als erste Modelle und ein Studenten-Modell 410 als reduziertes Modell.

Vor dem Training des Studenten-Modells 410 wird ein Lehrer-Modell 110 ausgewählt.

Zumindest ein Lehrer-Modell 110, 210, 310 hängt von der Art von Assetdaten oder Sensordaten ab.

Assetdaten können Geräte-Daten sein, beispielsweise Betriebszustandsdaten, Wartungsdaten, etc.

Das erzeugte, reduzierte Modell wird in einem Speicher eines Edge-Geräts gespeichert, und das Gerät wird mit dem reduzierten Modell aus dem Speicher des Edge-Geräts angesteuert.

Sensordaten können beispielsweise durch ein Messgerät, welches mit dem Edge-Device verbunden ist, erfasst werden.

Ein Lehrer 100 weist eine erste Lage 110 und weitere Lagen bis zur Lage 111 auf, welche einer Softmax-Funktion 120 zugeführt werden.

Die Softmax-Funktion 120 basiert auf einem Hoch-Temperatur Softmax auf den letzten Lagen Logits.

Das Studenten-Modell-Training 401 des Studenten-Modells 410 erfolgt durch Anwendung der Softmax-Ausgabe 431 und einem "one hot"-kodierten y_true-Wert, wodurch ein verketteter Ziel-Vektor 430 erzeugt wird.

Aus dem Studenten-Modells 410 werden aus niedrigen Lagen 411 Logits der letzten Lage 412 gebildet, welche wiederum sowohl in eine Softmax Ausgabe 421 des Modells bei hoher Temperatur, als auch in eine Softmax Ausgabe 422 des Modells bei niedriger Temperatur überführt werden, was zu einer Studenten-Modell Ausgabe 420 führt.

Über eine KD Verlustfunktion 450 kann ein Wissensverlust zwischen den Modellen bestimmt werden.

**Tabelle 1** zeigt Beispiele zur KD in NN. Weitere Details dazu sind im Artikel "Distilling the Knowledge in a Neural Network", Hinton et al., NIPS 2014 Deep Learning Workshop, genannt.

**Tabelle 1:** Konzepte zum KD-Verfahren

| Konzept | Beschreibung |
|---|---|
| Softmax Funktion | In der Mathematik ist die sogenannte Softmax-Funktion oder normalisierte Exponentialfunktion eine Generalisierung der logistischen Funktion, die einen K-dimensionalen Vektor mit reellen Komponenten in einen K-dimensionalen Vektor ebenfalls als Vektor reeller Komponenten in den Wertebereich (0, 1) projiziert, wobei sich die Komponenten zu 1 aufsummieren. Mit anderen Worten verwendet die Softmax-Funktion einen nicht normalisierten Vektor und normiert ihn in eine Wahrscheinlichkeitsverteilung. |
| "one hot" encoding | Beim maschinellen Lernen ist "one hot" eine Gruppe von Bits, unter denen die zulässigen Kombinationen von Werten nur solche mit einem einzigen High (1)-Bit und alle anderen Low (0) sind. Eine ähnliche Implementierung, bei der alle Bits "1" sind, mit Ausnahme einer "0", wird manchmal als "kalt" bezeichnet. In Statistiken repräsentieren Dummy-Variablen eine ähnliche Technik zur Darstellung kategorialer Daten. "one hot" bezeichnet folglich einen Prozess, bei welchem kategoriale Variablen in eine Form konvertiert werden, die ML-Algorithmen zur Verfügung gestellt werden könnten, um die Vorhersage besser zu machen. |
| Temperatur | Das Hinzufügen von Temperatur zu Softmax ändert die Wahrscheinlichkeitsverteilung, das heißt, sie ist weicher, wenn T>1 ist. Bei der KD wird Wissen vom Lehrer-Modell 110 an das Studenten-Modell 410 übertragen, indem eine Verlustfunktion minimiert wird, bei der das Ziel die Verteilung der vom Lehrer-Modell 110 vorhergesagten Klassenwahrscheinlichkeiten ist. Das ist die Ausgabe einer Softmax-Funktion in den Logits des Lehrer-Modells 110. In vielen Fällen hat diese Wahrscheinlichkeitsverteilung jedoch mit einer sehr hohen Wahrscheinlichkeit die richtige Klasse, wobei alle anderen Klassenwahrscheinlichkeiten sehr nahe bei 0 liegen. Ein Logit ist in der Statistik der natürliche Logarithmus einer Chance (Wahrscheinlichkeit $p$ durch Gegenwahrscheinlichkeit $(1 - p)$). Daher bietet es nicht viele Informationen, die über die bereits im Datensatz bereitgestellten Boden-Wahrheitskennzeichnungen hinausgehen. Um dieses Problem zu lösen, wird das Konzept der "Softmax-Temperatur" eingeführt. |

Es können KD und Lehrer-Studenten-Muster verwendet werden, um ML-Modelle in C2E-Umgebungen zu trainieren. Die Domäne von KD und DNN, Convolutional Neural Networks (CNN), werden häufig im Bereich der Computervision verwendet, um beispielsweise Bilder zu klassifizieren. DNN im Allgemeinen kann jedoch auch auf viele andere Aufgaben angewendet werden, einschließlich Zeitreihenanalyse und Klassifizierung.

Beispielsweise werden Vision-Techniken in Robotik-Szenarien eingesetzt, um die Flexibilität zu erhöhen. Ein Anwendungsfall ist zum Beispiel die Kommissionierung von Waren, bei der ein Roboter einen Artikel auswählen muss, der sich in einem Karton befindet. Die Herausforderung besteht darin, dass diese Elemente nicht sortiert werden, sondern zufällig in die Box gelegt wurden. Daher benötigt der Roboter Sehfähigkeiten, um die Artikel zu lokalisieren und auszuwählen. Dieser Anwendungsfall erfordert am Rande ML-Fähigkeiten, da nicht jeder von einem Vision-Sensor oder einer Punktewolke eines LiDAR-Sensors erfasste Frame in die Cloud übertragen und verarbeitet werden kann.

Ein anderes Beispiel, bei dem CNN oder ähnliche DNN-Techniken eine wichtige Rolle spielen können, ist die Analyse von Zeitreihendaten. Neuere Ansätze basieren auf DNN- und Computervisionstechniken, um eine automatische Merkmalsextraktion und Mustererkennung durchzuführen. Anstatt manuelles Feature-Engineering basierend auf den tatsächlichen Zeitreihendaten durchzuführen, können die Daten in Spektrogramme umgewandelt und die resultierenden Bilder zur automatischen Verarbeitung und Klassifizierung in CNN eingespeist werden.

Dies sind nur zwei Szenarien, in denen fortgeschrittene ML-Techniken nahe der Edge hilfreich sein können.

Der KD-Ansatz und die Anwendung von Mustern wie "Lehrer-Student" sind vorteilhaft, um das Wissen aus größeren Modellen zu extrahieren, die normalerweise in der Cloud ausgeführt werden, um kompakte Modelle für ein Edge-Gerät zu trainieren (lehren). Die Schritte in einem C2E-Kontext werden im Folgenden beschrieben.

Das Verfahren gemäß der Erfindung mithilfe einer KD-Lösung für C2E ist detailliert in **Fig. 6** dargestellt.

Ein Studenten-Modell 410 des Studenten 100 wird mit einem oder mehreren Lehrer-Modellen 110, 210, 310 der jeweiligen Lehrer 100, 200, 300 trainiert.

Die Lehrer-Modelle 110, 210, 310 mit industriellem Kontext werden in einer Cloud 10 gehostet

Das aus dem Training durch die Lehrer-Modelle 110, 210, 310 resultierende Studenten-Modell 410 ist normalerweise auf eine bestimmte Aufgabe, beispielsweise eine Vorhersage, zugeschnitten. Das resultierende Studenten-Modell 410 ist ein leichtes Modell, das auf Edge-Geräten bereitgestellt werden kann.

Es ist allerdings zu beachten, dass das Studenten-Modell 410 in Zukunft auch ein Lehrer werden kann, da der Studenten 400 möglicherweise am Edge-Gerät mit neuen Daten aktualisiert wird und dadurch zu einem wertvollen Lehrer wird.

Die einzige Aktion, die erforderlich ist, das (aktualisierte) Studenten-Modell 410 in der Cloud 10 verfügbar zu machen und den Studenten 400 beim Modell-Repository 60 zu registrieren.

**Lehrer-Modelle:**

In einem IoT-Kontext werden verschiedene Geräte, darunter Maschinen, Roboter, Pumpen usw., mit einer IoT-Plattform verbunden, um Sensordaten zu sammeln. Diese Assets und angeschlossenen Sensoren liefern umfassende Informationen an die Plattform.

Der erste Schritt ist das Erstellen von Lehrer-Modellen 110, 210, 310. Dieses Modell ist in Bezug auf die Komplexität in Bezug auf die Anzahl der zu optimierenden Lagen und Parameter (typischerweise ein DNN) oft "umständlicher" (z.B. aufgrund der Komplexität des Modells), jedoch leistungsfähig genug, um komplexe Merkmale zu erlernen. Daten aus verschiedenen Assets - möglicherweise von verschiedenen Unternehmen - können gemeinsam genutzt und zur Erstellung umfassender DNN-Modelle in der Cloud-basierten Plattform verwendet werden.

Die Cloud 10 bietet die Infrastruktur für die verteilte und parallele Verarbeitung einschließlich optimierter Verarbeitung mit GPUs. Daher kann ein großes ML-Modell auf einer Cloud-basierten Computerinfrastruktur effizient trainiert werden. Die Cloud bietet des Weiteren die Möglichkeit, DNN Modelle anhand von realen Daten und Daten aus einer Simulation zu trainieren.

Ein besonders vorteilhafter Schritt besteht darin, ein Lehrer-Modell 110, 210, 310 auffindbar zu machen, indem Metadaten, wie beispielsweise Daten 71, Markierungen 72 und Softmax Ausgaben 73 mit diesen Modellen 110, 210, 310 verknüpft werden. In welcher Domäne werden sie beispielsweise verwendet, für welche Art von Assets, welche Art von Aufgabe sie ausgeführt werden, welche Art von Klassen sie vorhersagen können usw. Die resultierenden Lehrer-Modelle 110, 210, 310 werden dann einem Repository 60 übergeben, um das Auffinden und Abrufen von Modellen zu unterstützen, basierend auf Metadaten 71-73, wobei die strichlierten Pfeile anzeigen, dass die Lehrer-Modelle einschließlich der relevanten Metadaten 71-73 im Modell-Repository 60 registriert sind).

**Studenten-Modelle:**

**• Entdeckung der Lehrer:**

ML-Modelle erfüllen einen bestimmten Zweck, zu welchem vor dem Training eines Studenten 400 die geeigneten Lehrer 100, 200, 300 ausgewählt werden müssen.

Lehrer 100, 200, 300 können beispielsweise basierend darauf ausgewählt werden, welche Art von Asset- und Sensordaten in welchem industriellen Kontext die Modelle trainiert wurden oder welche Art von Aufgabe die Maschine und das Modell ausführt.

Zum Beispiel können Zeitreihendaten oder Spektrogramme von einer Fräsmaschine erfasst werden. Die Fräsmaschine führt bestimmte Aufgaben mit einer Reihe von Werkzeugmaschinen aus. Diese Art von Daten wird als Trainingsdaten verwendet, um das Lehrer-Modell zu ermitteln. Das Modell-Repository 60 enthält Metadaten wie Datensätze, Modelle, Vorhersagen und Trainingsläufe.

Darüber hinaus werden die Bewertungsergebnisse der Experimente verwaltet, um Zugang zu grundlegenden Modell-Qualitäts-Metriken (beispielsweise RMSE) zu erhalten.

Die detaillierte Struktur eines Modell-Repositorys 60 kann beispielsweise aus dem Artikel "Automatically tracking netadata and provenance of machine learning experiments", Machine Learning Systems Workshop at NIPS 2017, Long Beach, CA, USA. entnommen werden, welcher das JSON-Schema zum Verwalten von ML-Modell-Metadaten "A JSON-based schema for storing declarative descriptions of machine learning experiments" (https://github.com/awslabs/ml-experiments-schema, aufgerufen am 2.5.2019) beschreibt.

**• Finden von Lehrergewichten:**

Da für das Trainieren eines Studenten-Modells 410 mehrere Lehrer ausgewählt werden können, muss die Ausgabe der Lehrer-Modelle 110, 210, 310 gewichtet werden.

**• Studenten-Training:**

Anstatt die Bodenwahrheitsetiketten zu verwenden, definiert der Trainings-Ansatz Lehrer-Studenten eine Verlustfunktion 450 als

$$\mathcal{L}(\theta) = - \sum q_i \, log(p_i)$$

Dabei ist $q_i$ das sogenannte Soft-Label des Lehrer-Modells 110, 210, 310, das als Pseudo-Label fungiert.
$p$ ist die Ausgabe-Wahrscheinlichkeit der Klasse des Studenten-Modells 410.

In $q$ haben die konkurrierenden Klassen für jedes Trainingsbeispiel kleine, aber ungleich null betragende, hintere Wahrscheinlichkeiten.

Zwischen dem Lehrer-Modell 110, 210, 310 und dem Studenten-Modell 410 kann dementsprechend die Verlustfunktion 450 gebildet werden.

Im Ansatz für mehrere Lehrer-Modelle 110, 210, 310 werden Soft-Labels $q$ durch gewichtete Ensembles von Nachfahren aus jedem Lehrer-Modell 110, 210, 310 erstellt:

$$q_i = \sum_k w_k \, q_{ik}$$

wobei $w_k \in [0,1]$ das Lehrergewicht und $q_{ik}$ ist das Soft-Label des $k$-ten Lehrers ist.

Die KD Verlustfunktion 450 ist ein gewichteter Durchschnitt des logarithmischen Verlusts zwischen dem jeweiligen Teilen des Zielvektors 430 und der Ausgabe des Studenten-Modells 410.

Aus der KD Verlustfunktion 450 wird ein Supervisions-Datensatz 451 abgeleitet, welcher mit dem Studenten-Modell 410 des Studenten 400 abgeglichen wird. Ein prognostizierter Ausgabewert 452 wird der KD Verlustfunktion 450 rückgeführt.

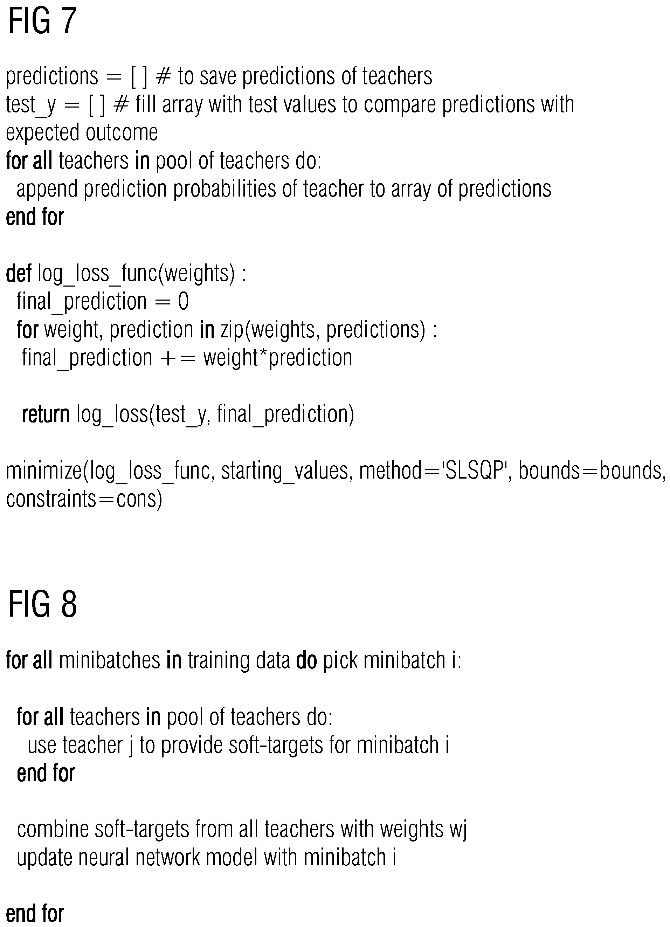

**Fig. 7** zeigt ein Beispiel eines Pseudo-Programmcodes zur Bestimmung eines Lehrer-Gewichts.

**Fig. 8** zeigt ein Beispiel eines Pseudo-Codes zum Trainieren eines Studenten.

Eine erfindungsgemäße Vorrichtung zur Ansteuerung eines Geräts mit einem Datensatz ist ein computerimplementiertes Verfahren und in den Figuren nicht gesondert gezeigt.

Diese Vorrichtung ist dazu eingerichtet, ausgehend von einem ersten Modell, ein reduziertes Modell auf Basis eines Reduktions-Verfahrens nach einem der vorhergehenden Ansprüche zu erzeugen und mithilfe des reduzierten Modells den Datensatz zu erzeugen und das Gerät mit dem Datensatz insbesondere von einem Edge-Gerät anzusteuern.

**Bezugszeichenliste:**

| 1 | DNN-Architekturen |
| 2 | Top-5 ImageNet-Klassifikations-Fehler [%] |
| 10 | Server/ Cloud |
| 11 | DNN-Modelltraining Anwendungs-Ausführung |
| 20 | Intelligenz und Analyse |
| 21 | Geräte-Vorteile |
| 30 | Edge/ Gerät |
| 31 | DNN Anwendungs-Ausführung |
| 50-52 | Modelle unterschiedlicher Größe |
| 100, 200, 300 | Lehrer |
| 101, 102, L, L1 | Lagen, Schichten |
| 103, 420-422, 431, 432, 451 | Ausgabe |
| 110, 210, 310 | Lehrer-Modell (gehostet in Cloud) |
| 60 | Daten-Ablage, Repository |
| 70 | Softmax Wert |
| 71-73 | Metadaten |
| 150 | Wissensmodell |
| 400 | Student |
| 401 | Studenten-Modell Training |
| 410 | Studenten-Modell (gehostet in Edge) |
| 411 | niedrige Lagen |
| 412 | Logits der letzte Lage |
| 430 | Verketteter Zielvektor |
| 450 | KD Verlustfunktion |
| 451 | Supervision |

**Patentansprüche**

1. Verfahren zur Ansteuerung eines Geräts mit einem Datensatz, **dadurch gekennzeichnet, dass,** ausgehend von einem ersten Modell, ein reduziertes Modell auf Basis eines Reduktions-Verfahrens, welches auf dem Prinzip der Wissensdestillation beruht, erzeugt wird und mithilfe des reduzierten Modells der Datensatz erzeugt wird, mit welchem das Gerät angesteuert wird.

2. Verfahren nach dem vorhergehenden Anspruch, wobei das Reduktions-Verfahren zumindest ein Lehrer-Modell (110) als erstes Modell und ein Studenten-Modell (410) als reduziertes Modell umfasst.

3. Verfahren nach dem vorhergehenden Anspruch, wobei vor dem Training des Studenten-Modells (410) zumindest ein Lehrer-Modell (110) ausgewählt wird.

4. Verfahren nach dem vorhergehenden Anspruch, wobei das zumindest eine Lehrer-Modell (110) von der Art von Assetdaten oder Sensordaten abhängt.

5. Verfahren nach einem der Ansprüche 2 bis 4, wobei zwischen dem zumindest einen Lehrer-Modell (110) und dem Studenten-Modell (410) eine Verlustfunktion (450) gebildet werden kann, welche nach dem Zusammenhang definiert ist:

$$\mathcal{L}(\theta) = - \sum q_i \, log(p_i)$$

wobei

$q_i$ das sogenannte Soft-Label des Lehrer-Modells, das als Pseudo-Label fungiert, ist, und

$p$ die Ausgabe-Wahrscheinlichkeit der Klasse des Studenten-Modells (410) ist.

6. Verfahren nach dem vorhergehenden Anspruch, wobei zumindest zwei Lehrer-Modelle (110) vorgesehen sind, welche gewichtet werden und in der Verlustfunktion (450) berücksichtigt werden, wobei Soft-Labels $q$ bestimmt werden nach dem Zusammenhang:

$$q_i = \sum_k w_k \; q_{ik}$$

wobei

$w_k \in [0,1]$ das Lehrergewicht ist, und
$q_{ik}$ das Soft-Label des $k$-ten Lehrers ist.

7. Verfahren nach einem der vorhergehenden Ansprüche, wobei das erzeugte, reduzierte Modell in einem Speicher eines Edge-Geräts gespeichert wird und mithilfe des reduzierten Modells im Speicher des Edge-Geräts der Datensatz erzeugt wird, mit welchem das Gerät von dem Edge-Gerät angesteuert wird.

8. Vorrichtung zur Ansteuerung eines Geräts mit einem Datensatz, welche dazu eingerichtet ist, ausgehend von einem ersten Modell, ein reduziertes Modell auf Basis eines Reduktions-Verfahrens nach einem der vorhergehenden Ansprüche zu erzeugen und mithilfe des reduzierten Modells den Datensatz zu erzeugen und das Gerät mit dem Datensatz anzusteuern.

9. Vorrichtung nach dem vorhergehenden Anspruch, wobei das reduzierte Modell in einem Speicher eines Edge-Geräts gespeichert ist.

## FIG 1

| | | | | | | | |
|---|---|---|---|---|---|---|---|
| | 152 L | 22 L | 19 L | | | | |
| 2 [%] | 3.57 | 6.7 | 7.3 | 11.7 8 L | 16.4 8 L | 25.8 L1 | 28.2 |
| | ILSVRC'15 ResNet | ILSVRC'14 GoogleNet | ILSVRC'14 VGG | ILSVRC'13 | ILSVRC'12 AlexNet | ILSVRC'11 | ILSVRC'10 1 |

## FIG 2

10  20  30

11 ———————→ 21 ———————→ 31

# FIG 3

50

51

52

# FIG 4

100

400

150

## FIG 5

## FIG 6

# FIG 7

```
predictions = [ ] # to save predictions of teachers
test_y = [ ] # fill array with test values to compare predictions with
expected outcome
for all teachers in pool of teachers do:
  append prediction probabilities of teacher to array of predictions
end for


def log_loss_func(weights) :
  final_prediction = 0
  for weight, prediction in zip(weights, predictions) :
  final_prediction += weight*prediction


  return log_loss(test_y, final_prediction)


minimize(log_loss_func, starting_values, method='SLSQP', bounds=bounds,
constraints=cons)
```

# FIG 8

```
for all minibatches in training data do pick minibatch i:

  for all teachers in pool of teachers do:
    use teacher j to provide soft-targets for minibatch i
  end for


  combine soft-targets from all teachers with weights wj
  update neural network model with minibatch i


end for
```

Europäisches
Patentamt

European
Patent Office

Office européen
des brevets

**EUROPÄISCHER RECHERCHENBERICHT**

Nummer der Anmeldung

EP 19 17 3512

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SHARMA RAGINI ET AL: "Are Existing Knowledge Transfer Techniques Effective for Deep Learning with Edge Devices?", 2018 IEEE INTERNATIONAL CONFERENCE ON EDGE COMPUTING (EDGE), IEEE, 2. Juli 2018 (2018-07-02), Seiten 42-49, XP033408084, DOI: 10.1109/EDGE.2018.00013 [gefunden am 2018-09-26] | 1-5,7-9 | INV. G06N20/20 |
| Y | * Seite 42 - Seite 49, linke Spalte, Absatz 4 * | 6 | |
| X | ----- TAKASHI FUKUDA ET AL: "Efficient Knowledge Distillation from an Ensemble of Teachers", INTERSPEECH 2017, 1. Januar 2017 (2017-01-01), Seiten 3697-3701, XP055636897, ISCA DOI: 10.21437/Interspeech.2017-614 | 1-5,7-9 | |
| Y | * Seite 3697 - Seite 3700 * | 6 | RECHERCHIERTE SACHGEBIETE (IPC) |
| X | ----- JIHONG PARK ET AL: "Wireless Network Intelligence at the Edge", ARXIV.ORG, CORNELL UNIVERSITY LIBRARY, 201 OLIN LIBRARY CORNELL UNIVERSITY ITHACA, NY 14853, 7. Dezember 2018 (2018-12-07), XP081493013, | 1-5,7-9 | G06N |
| A | * Seite 1 - Seite 23, linke Spalte * | 6 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 30. Oktober 2019 | Volkmer, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung

EP 19 17 3512

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | HEE-SOO HEO ET AL: "Acoustic scene classification using teacher-student learning with soft-labels", ARXIV.ORG, CORNELL UNIVERSITY LIBRARY, 201 OLIN LIBRARY CORNELL UNIVERSITY ITHACA, NY 14853, 23. April 2019 (2019-04-23), XP081436980, * das ganze Dokument * ----- | 1-9 | |
| A | WO 2017/035536 A1 (FOGHORN SYSTEMS INC [US]) 2. März 2017 (2017-03-02) * das ganze Dokument * ----- | 1-9 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 30. Oktober 2019 | Volkmer, Markus |

EPO FORM 1503 03.82 (P04C03)

Seite 2 von 2

## ANHANG ZUM EUROPÄISCHEN RECHERCHENBERICHT
## ÜBER DIE EUROPÄISCHE PATENTANMELDUNG NR.

EP 19 17 3512

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-10-2019

| Im Recherchenbericht angeführtes Patentdokument | Datum der Veröffentlichung | Mitglied(er) der Patentfamilie | Datum der Veröffentlichung |
|---|---|---|---|
| WO 2017035536 A1 | 02-03-2017 | AU 2016310529 A1 | 22-02-2018 |
| | | CN 108353090 A | 31-07-2018 |
| | | EP 3342137 A1 | 04-07-2018 |
| | | JP 2018534651 A | 22-11-2018 |
| | | KR 20180067502 A | 20-06-2018 |
| | | US 2018300124 A1 | 18-10-2018 |
| | | WO 2017035536 A1 | 02-03-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Nicht-Patentliteratur**

- **HINTON et al.** Distilling the Knowledge in a Neural Network. *NIPS 2014 Deep Learning Workshop, genannt,* 2014
- Automatically tracking netadata and provenance of machine learning experiments. *Machine Learning Systems Workshop at NIPS,* 2017
- *A JSON-based schema for storing declarative descriptions of machine learning experiments,* 02. Mai 2019, https://github.com/awslabs/ml-experiments-schema